# EUROPEAN PATENT APPLICATION

(11) **EP 3 611 223 A1**
(43) Date of publication of application: **19.02.2020**
(21) Application number: 18784689.4
(22) Date of filing: 23.03.2018
(51) Int. Cl.: C08L 23/16, C08K 3/04, C08K 3/22, C08K 5/18, C08K 5/40, F16L 11/10

(54) **RUBBER COMPOSITION AND HOSE**

(30) Priority: 13.04.2017 JP 2017079641
(71) Applicant: The Yokohama Rubber Co., Ltd., Minato-ku Tokyo 105-8685 (JP)
(72) Inventor: SUGIHARA, Koki, Hiratsuka City Kanagawa 254-8601 (JP)
(74) Representative: Grünecker Patent- und Rechtsanwälte PartG mbB
(86) International application number: PCT/JP2018/011818
(87) International publication number: WO 2018/190102

(57) **Abstract**

An object of the present invention is to provide a rubber composition and a hose that can be rubber having excellent bloom resistance. The present invention relates to a rubber composition and a hose having an outer layer formed of the rubber composition, the rubber composition including an ethylene-propylene-diene copolymer, a p-phenylenediamine-based anti-aging agent, carbon black, and zinc oxide, the content of the p-phenylenediamine-based anti-aging agent being 0.1 parts by mass or more and 5.0 parts by mass or less per 100 parts by mass of the ethylene-propylene-diene copolymer.

## Description

### Technical Field

The present invention relates to a rubber composition and a hose.

### Background Art

In prior art, an ethylene-propylene-diene copolymer (hereinafter may be referred to as "EPDM") having excellent ozone resistance and weather resistance is used in, for example, an outer layer of an air conditioner (AC) hose of a car and the like.

For example, Patent Document 1 proposes a rubber/cord composite made by bonding a rubber composition including an ethylene-propylene-diene copolymer and an organic fiber.

In recent years, slimming down is increasingly demanded in car engines, while turbochargers are introduced into the engines.

### Citation List

### Patent Literature

Patent Document 1: JP 2002-273827A

### Summary of Invention

### Technical Problem

EPDM used in hoses is rubber that has excellent ozone resistance but readily causes blooming, so that rubber compositions including EPDM must be formulated in consideration of bloom resistance. Therefore, the types, combinations, or compounding amounts of additives (for example, vulcanization accelerators) included in the rubber compositions are subjected to limitations for suppressing blooming.

Furthermore, as described above, introduction of a turbocharger into a car engine narrows the inside of the engine room and can raise its temperature.

As described above, air conditioning hoses used in engine rooms under high temperature conditions are required to have high heat resistance, and using a combination of heat resistant anti-aging agents and heat resistant vulcanization systems on rubber compositions of each member is suggested as a means of improving heat resistance. However, these combinations tend to cause blooming, so limitations are imposed on their formulae. Furthermore, blooming occurs more likely under certain high-temperature conditions.

Under these circumstances, the present inventors prepared and evaluated a rubber composition including EPDM; they have found that the rubber made from the rubber composition has low bloom resistance.

Therefore, an object of the present invention is to provide a rubber composition that can be rubber having excellent bloom resistance.

Another object of the present invention is to provide a hose.

### Solution to Problem

As a result of diligent research to solve the above problems, the present inventors have found that the desired effects can be achieved by the use of a p-phenylenediamine-based anti-aging agent for EPDM and accomplished the present invention.

The present invention is based on the findings described above and, specifically, solves the problems described above by the following features.

1. A rubber composition including an ethylene-propylene-diene copolymer, a p-phenylenediamine-based anti-aging agent, carbon black, and zinc oxide, the content of the p-phenylenediamine-based anti-aging agent being 0.1 parts by mass or more and 5.0 parts by mass or less per 100 parts by mass of the ethylene-propylene-diene copolymer.
2. The rubber composition according to 1, wherein the diene composing the ethylene-propylene-diene copolymer includes at least ethylidene norbornene, the content of the constituent unit by ethylidene norbornene being from 5 to 13 mass% of the ethylene-propylene-diene copolymer.
3. The rubber composition according to 1 or 2, which further includes a vulcanization accelerator, the content of the vulcanization accelerator being 2.0 parts by mass or more per 100 parts by mass of the ethylene-propylene-diene copolymer.
4. The rubber composition according to 3, wherein the vulcanization accelerator includes at least a thiuram-based vulcanization accelerator.
5. The rubber composition according to any of 1 to 4, which further includes a crosslinking agent, the crosslinking agent including at least sulfur, and the content of the crosslinking agent being 0.5 parts by mass or more per 100 parts by mass of the ethylene-propylene-diene copolymer.
6. The rubber composition according to any of 1 to 5, wherein the p-phenylenediamine-based anti-aging agent includes at least N,N'-di-2-naphthyl-p-phenylenediamine.
7. The rubber composition according to any of 1 to 6, wherein the mass ratio of the p-phenylenediamine-based anti-aging agent to the zinc oxide (p-phenylenediamine-based anti-aging agent/zinc oxide) is from 0.1 to 1.0.
8. The rubber composition according to any of 1 to 7, which is substantially free of peroxide.
9. The rubber composition according to any of 1 to 8, which is used in an outer layer of a hose.
10. A hose having an outer layer formed of the rubber composition described in any of 1 to 9.

### Advantageous Effects of Invention

According to the rubber composition of the present invention, a rubber having excellent bloom resistance is obtained.

The hose of the present invention has excellent bloom resistance.

### Brief Description of Drawings

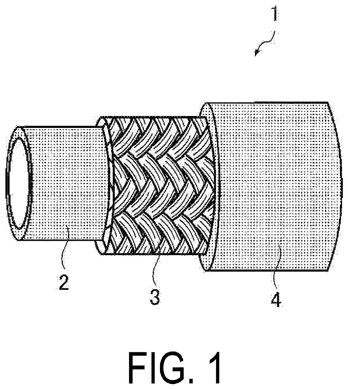

FIG. 1 is a perspective view schematically illustrating a cutaway of each layer of an example of the hose of the present invention.

### Description of Embodiments

Embodiments of the present invention are described in detail below.

Note that, in the present specification, (meth)acrylate represents acrylate or methacrylate, (meth)acryloyl represents acryloyl or methacryloyl, and (meth)acryl represents acryl or methacryl.

Furthermore, in the present specification, numerical ranges indicated using "(from)... to..." include the former number as the lower limit value and the latter number as the upper limit value.

In the present specification, unless otherwise noted, a single corresponding substance may be used for each component, or a combination of two or more types of corresponding substances may be used for each component. When a component contains two or more types of substances, the content of the component means the total content of the two or more types of substances.

In the present specification, unless otherwise noted, the method of producing each component is not particularly limited. Examples thereof include known products.

In the present specification, excellent bloom resistance of the rubber formed by the rubber composition of the present invention may be represented as "superior in bloom resistance".

### Rubber Composition

The rubber composition (composition of the present invention) of the present invention is a rubber composition including an ethylene-propylene-diene copolymer, an p-phenylenediamine-based anti-aging agent, carbon black, and zinc oxide, the content of the p-phenylenediamine-based anti-aging agent being 0.1 parts by mass or more and 5.0 parts by mass or less per 100 parts by mass of the ethylene-propylene-diene copolymer.

Each of the components included in the composition according to an embodiment of the present invention will be described in detail below.

### Ethylene-propylene-diene Copolymer

The ethylene-propylene-diene copolymer (EPDM) included in the composition of the present invention is not particularly limited as long it is a copolymer of ethylene, propylene, and diene.

Examples of the diene composing the EPDM include non-conjugated diene compounds. Specific examples of the non-conjugated diene compound include dicyclopentadiene (DCPD);
ethylidene norbornene such as 5-ethylidene-2-norbornene (ENB); and 1,4-hexadiene (HD).

The diene composing the ethylene-propylene-diene copolymer preferably includes at least ethylidene norbornene from the perspective of achieving superior effect of the present invention, allowing the use of a wide range of vulcanization systems, and achieving excellent mechanical properties.

The content of the constituent units formed by the diene (for example, ethylidene norbornene) is preferably from 5 to 13 mass% and more preferably from 8 to 12 mass% of the ethylene-propylene-diene copolymer from the perspective of achieving superior effect of the present invention, allowing the use of a wide range of vulcanization systems, and achieving excellent mechanical properties.

In the present invention, the content of the constituent units of the diene (for example, ethylidene norbornene) is based on the ethylene-propylene-diene copolymer (ethylene-propylene-ethylidene norbornene copolymer) itself having a constituent unit of the diene (for example, ethylidene norbornene).

### P-phenylenediamine-based Anti-aging Agent

The p-phenylenediamine-based anti-aging agent included in the composition of the present invention is an anti-aging agent having a structure of p-phenylenediamine.

The composition according to an embodiment of the present invention has excellent bloom resistance by inclusion of a p-phenylenediamine-based anti-aging agent.

Furthermore, when the composition of the present invention includes a p-phenylenediamine-based anti-aging agent, the type, combination, or compounding amount of the vulcanization accelerator is almost free from known limitations, which may increase the flexibility of formulation design.

Examples of the structure of the p-phenylenediamine include the structure expressed by Formula (1) below.
Formula (1)

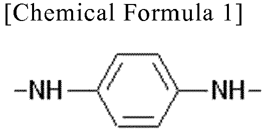

Organic groups can each be independently bonded to both sides of the structure represented by Formula (1).

The organic group is not particularly limited. Examples thereof include a hydrocarbon group that may have a heteroatom.

Examples of the hydrocarbon group include aliphatic hydrocarbon groups (which may be linear, branched, or cyclic, and may have an unsaturated bond), aromatic hydrocarbon groups, and combinations thereof.

Examples of the aromatic hydrocarbon group include phenyl groups and naphthyl groups. Among them, naphthyl groups are preferable.

Examples of the heteroatom include an oxygen atom, a nitrogen atom, and a sulfur atom. The heteroatom can be bonded to a hydrogen atom, an oxygen atom, or another heteroatom to form a substituent. Examples of the substituent include ester bonds, hydroxy groups, and sulfonyl groups.

Examples of the p-phenylenediamine-based anti-aging agents include N,N'-diaryl-p-phenylenediamine (wherein the diaryl may each independently have an alkyl group), N-alkyl-N'-aryl-p-phenylenediamine (not including the N,N'-diaryl-p-phenylenediamine), and N,N'-dialkyl-p-phenylenediamine (not including the N,N'-diaryl-p-phenylenediamine).

Examples of the N,N'-diaryl-p-phenylenediamine (wherein any of the diaryl has no alkyl group) includes N,N'-diphenyl-p-phenylenediamine and N,N'-di-2-naphthyl-p-phenylenediamine.

Examples of N,N'-diaryl-p-phenylenediamine (wherein one or all of aryl groups of the diaryl each independently have an alkyl group) include N,N'-di(alkylphenyl)-p-phenylenediamine and p-(p-toluenesulfonylamide)diphenylamine.

Examples of N-alkyl-N'-aryl-p-phenylenediamine (not including the N,N'-diaryl-p-phenylenediamine) include N-isopropyl-N'-phenyl-p-phenylenediamine, N-dimethylbutyl-N'-phenyl-p-phenylenediamine, N-(3-(meth)acroyloxy-2-hydroxypropyl)-N'-phenyl-p-phenylenediamine, and N-((meth)acryloyl)-N'-phenyl-p-phenylenediamine.

Among them, the p-phenylenediamine-based anti-aging agent is preferably N,N'-diaryl-p-phenylenediamine (wherein the diaryl may each independently have an alkyl group) or the N-alkyl-N'-aryl-p-phenylenediamine, more preferably N,N'-diaryl-p-phenylenediamine (any of the diaryl has no alkyl group), and even more preferably N,N'-di-2-naphthyl-p-phenylenediamine from the perspective of achieving superior effect of the present invention and excellent heat aging resistance and/or bending aging resistance.

### Content of P-phenylenediamine-based Anti-aging Agent

In the present invention, the content of the p-phenylenediamine-based anti-aging agent is 0.1 parts by mass or more and 5.0 parts by mass or less per 100 parts by mass of the ethylene-propylene-diene copolymer.

The content of the p-phenylenediamine-based anti-aging agent is preferably from 0.5 to 2.0 parts by mass and more preferably 1.5 to 2.0 parts by mass per 100 parts by mass of the ethylene-propylene-diene copolymer from the perspective of achieving superior effect of the present invention and excellent heat aging resistance.

The mass ratio of the p-phenylenediamine-based anti-aging agent to zinc oxide (p-phenylenediamine-based anti-aging agent/zinc oxide) is preferably from 0.1 to 1.0 and more preferably from 0.3 to 0.4 from the perspective of achieving superior effect of the present invention and excellent heat aging resistance.

### Carbon Black

The carbon black included in the composition of an embodiment of the present invention is not particularly limited. Examples thereof include known products.

Examples of the carbon black include fast extruding furnace (FEF) carbon black, general purpose furnace (GPF) carbon black, and semi-reinforcing furnace (SRF) carbon black.

Among them, SRF carbon black is preferable from the perspective of achieving superior effect of the present invention and excellent heat resistance.

The content of the carbon black is preferably from 50 to 100 parts by mass and more preferably from 70 to 90 parts by mass per 100 parts by mass of the ethylene-propylene-diene copolymer from the perspective of achieving superior effect of the present invention and excellent heat resistance.

### Zinc Oxide

The zinc oxide included in the composition of an embodiment of the present invention is not particularly limited. Examples thereof include known products.

The content of the zinc oxide is preferably from 2 to 15 parts by mass and more preferably from 4 to 6 parts by mass per 100 parts by mass of the ethylene-propylene-diene copolymer from the perspective of achieving superior effect of the present invention and excellent mechanical properties.

### Vulcanization Accelerator

The composition according to an embodiment of the present invention may further include a vulcanization accelerator.

The vulcanization accelerator is not particularly limited. Examples of the vulcanization accelerator include thiuram-based vulcanization accelerators, thiazole-based vulcanization accelerators, sulfonamide-based vulcanization accelerators, guanidine-based vulcanization accelerators, and alkylphenyl dithiocarbamate-based vulcanization accelerators.

The vulcanization accelerator may include at least a thiuram-based vulcanization accelerator.

Examples of the thiuram-based vulcanization accelerator include tetramethylthiuram disulfide, tetraethylthiuram disulfide, tetrabutylthiuram disulfide, tetrabenzylthiuram disulfide, tetrakis (2-ethylhexyl) thiuram disulfide, tetramethylthiuram monosulfide, and dipentamethylenethiuram tetrasulfide.

Among them, tetramethylthiuram disulfide, tetraethylthiuram disulfide, and tetrabutylthiuram disulfide are preferable from the perspective of achieving superior effect of the present invention and excellent mechanical properties.

The content of the vulcanization accelerator is preferably 2.0 parts by mass or more, and more preferably from 2.0 to 4.0 parts by mass per 100 parts by mass of the ethylene-propylene-diene copolymer from the perspective of achieving superior effect of the present invention and excellent mechanical properties and/or heat resistance.

### Crosslinking Agent

The composition of the present invention may further include a crosslinking agent.

The crosslinking agent preferably includes at least sulfur, and the agent is more preferably sulfur.

The sulfur is not particularly limited. Examples thereof include known products.

The content of the crosslinking agent is preferably 0.5 parts by mass or more and more preferably from 0.6 to 1.0 parts by mass per 100 parts by mass of the ethylene-propylene-diene copolymer from the perspective of achieving superior effect of the present invention and excellent heat resistance.

### Additives

The composition of the present invention may further include additives as necessary within a range that will not impair the effect of the present invention.

Examples of the additives include rubber other than EPDM, reinforcing agents other than the carbon black, processing aids, vulcanization accelerating aids (e.g., stearic acid), and anti-aging agents other than p-phenylenediamine-based anti-aging agents, plasticizers, and vulcanization retarders.

### Method for Producing Rubber Composition

The composition of the present invention is not particularly limited at to its production method. For example, it may be produced by mixing the above-mentioned essential components and optional components that may be used as necessary under conditions at 100 to 180°C.

The composition of the present invention may be substantially free of peroxide.

Peroxide means a compound having -O-O-.

In the present invention, "substantially free of peroxide" means that the content of peroxide is from 0 to 1.0 mass% per the whole composition of the present invention.

### Vulcanization (crosslinking) of Rubber Composition

The method for vulcanizing (crosslinking) the composition of the present invention is not particularly limited. The composition the present invention may be vulcanized (crosslinked) by, for example, press vulcanization, steam vulcanization, oven vulcanization (hot air vulcanization), or hot water vulcanization under conditions at 140 to 190°C.

The composition of the present invention can be used, for example, in a hose. The composition of the present invention is preferably used in an outer layer of a hose.

Examples of the hose include air conditioning (air conditioner), power steering, and hydraulic hoses.

A preferred embodiment is the use of the composition of the present invention in an outer layer of a hose for an air conditioner of a car.

### Hose

The hose of the present invention is a hose having an outer layer formed of the rubber composition of the present invention.

The hose of the present invention has the outer layer described above, and thus has excellent bloom resistance.

### Outer Layer

The rubber composition forming the outer layer is not particularly limited as long as it is the rubber composition of the present invention (the composition of the present invention).

The thickness of the outer layer may be from 0.2 to 4 mm.

The hose of the present invention may further include, in addition to the outer layer, at least one selected from the group consisting of a reinforcing member (reinforcing layer), an inner layer, and an intermediate rubber layer. The reinforcing member may be one layer or a plurality of layers. The same applies to the inner layer and the intermediate rubber layer.

### Reinforcing Member

The reinforcing member is not particularly limited. Examples thereof include known products.

Examples of the material of the reinforcing member include metal and fiber materials (e.g., polyamide and polyester). The reinforcing member may be surface treated.

Examples of the configuration of the reinforcing member include those braided to have a spiral structure and/or a blade structure.

### Inner Layer

The rubber composition which may form the inner layer is not particularly limited. For example, the inner layer may be formed of the rubber composition of the present invention.

The thickness of the inner layer may be, for example, from 0.2 to 4 mm.

### Intermediate Rubber Layer

The rubber composition which may form the intermediate rubber layer is not particularly limited. Examples thereof include known products. The intermediate rubber layer may be formed using the composition of the present invention.

The intermediate rubber layer may be disposed between the outer layer and the reinforcing member, between the inner layer and the reinforcing member, or between the reinforcing members.

The thickness of the intermediate rubber layer may be, for example, from 0.2 to 0.7 mm.

The hose of the present invention may have, for example, an inner layer, a reinforcing member, and an outer layer in this order.

In the hose of the present invention, the outer layer may be the outermost layer of the hose.

A preferred embodiment of the hose of the present invention has no reinforcing member on the outer surface (outermost layer) of the hose.

An example of the hose of an embodiment of the present invention is described below with reference to the attached drawings. However, the present invention is not limited to the attached drawings.

FIG. 1 is a perspective view schematically illustrating a cut-away of each layer for an example of the hose of the present invention.

In FIG. 1, a hose 1 has an inner layer 2, a reinforcing member 3 on the inner layer 2, and an outer layer 4 on the reinforcing member 3.

The outer layer 4 is formed of at least the composition of an embodiment of the present invention.

The hose of the present invention is not particularly limited as to its production method. For example, a rubber composition for forming an inner layer; and a rubber composition for forming a reinforcing member and an outer layer (rubber composition of the present invention) are laminated in this order on a mandrel, the laminate is covered with a nylon cloth or the like, and the laminate covered with the nylon cloth or the like is subjected to press vulcanization, steam vulcanization, oven vulcanization (hot air vulcanization), or hot water vulcanization under conditions at 140 to 190°C at 30 to 180 minutes for vulcanization bonding, thereby producing the hose of an embodiment the present invention.

Examples of the use of hose of the present invention include air conditioning (air conditioner), power steering, and hydraulic hoses. A hose for air conditioner of a car is one of the preferable embodiments.

The hose of the present invention scarcely causes blooming even when used under conditions at 40°C and thus has excellent bloom resistance.

### Examples

The present invention is described below in detail using examples, but the present invention is not limited to such examples.

### Production of Rubber Composition

The components shown in Table 1 below were used in compositions (parts by mass) shown in the same table and mixed by an agitator to produce a rubber composition.

Specifically, of the components shown in Table 1, the components excluding sulfur and the vulcanization accelerator were kneaded for 5 minutes in a (3.4-L) Banbury mixer and discharged when the temperature reached 160°C, and thereby a master batch was obtained. Next, the master batch thus obtained was kneaded with sulfur and the vulcanization accelerator using an open roll, and thereby a rubber composition was obtained.

### Making of Vulcanized Rubber Sheet

### Vulcanized Sheet (immediately after vulcanization)

Each of the rubber compositions obtained as described above was vulcanized for 45 minutes under a surface pressure of 3.0 MPa using a press molding machine at 153°C, thus producing a vulcanized sheet having a thickness of 2 mm (immediately after vulcanization).

### Vulcanized Sheet One week after Vulcanization

The vulcanized sheet obtained as described above (immediately after vulcanization) was allowed to stand under conditions at 40°C for one week, thereby producing a vulcanized sheet one week after vulcanization.

### Evaluation of Bloom Resistance

The surface of the vulcanized sheet obtained as described above (immediately after vulcanization) or the vulcanized sheet one week after vulcanization was visually observed under conditions at 24°C.

### Evaluation Criteria for Bloom Resistance

- When the surface was black and glossy, the bloom resistance was rated very excellent and indicated with "⊚".
- When the surface was black and not glossy, the bloom resistance was rated moderately excellent and indicated with "○".
- When the surface was white, the bloom resistance was rated poor and indicated with "×".

**[Table 1]**

| Table 1 | | Example | | | | | Comparative Example | |
|---|---|---|---|---|---|---|---|---|
| | | 1 | 2 | 3 | 4 | 5 | 1 | 2 |
| EPDM (diene content: 10.0%) | | 100 | 100 | 100 | 100 | 100 | 100 | 100 |
| Carbon black (SRF) | | 90 | 90 | 90 | 90 | 90 | 90 | 90 |
| Plasticizer | | 30 | 30 | 30 | 30 | 30 | 30 | 30 |
| Vulcanization retarder (PVI) | | 0.3 | 0.3 | 0.3 | 0.3 | 0.3 | 0.3 | 0.3 |
| Zinc oxide | | 5 | 5 | 5 | 5 | 5 | 5 | 5 |
| Stearic acid | | 1 | 1 | 1 | 1 | 1 | 1 | 1 |
| P-phenylenediamine- based anti-aging agent 1 (white) | | 0.5 | 1 | 2 | 2 | | | 6 |
| P-phenylenediamine-based anti-aging agent 2 | | | | | | 1.5 | | |
| Anti-aging agent (MMB) | | 2 | 2 | 2 | | 2 | | |
| Vulcanization accelerator 1 (TT) | | 1.5 | 1.5 | 1.5 | 1.5 | 1.5 | 1.5 | 1.5 |
| Vulcanization accelerator 2 (DM) | | 2 | 2 | 2 | 2 | 2 | 2 | 2 |
| Sulfur | | 0.8 | 0.8 | 0.8 | 0.8 | 0.8 | 0.8 | 0.8 |
| Immediately after vulcanization | Bloom resistance 40°C | Excellent | Excellent | Excellent | Excellent | Excellent | Excellent | Yes |
| One week after vulcanization | | Yes | Yes | Excellent | Excellent | Yes | Poor | Poor |

Details of the components described in Table 1 are as follows.
- EPDM (diene content: 10.0%): ethylene-propylene-diene copolymer, trade name "Esprene 505" (available from Sumitomo Chemical Co., Ltd). The amount of diene (ethylidene norbornene) is 10.0 mass% of EPDM above. Ethylidene norbornene is used as a diene in EPDM.
- Carbon black (SRF): carbon black, trade name "Asahi 50" (available from Asahi Carbon Co., Ltd.), SRF carbon black
- Plasticizer: trade name "SUNPAR 2280" (available from Japan Sun Oil Company, Ltd.)
   Vulcanization retarder (PVI): compound name N-cyclohexylthiophthalimide, trade name "Retarder CTP" (available from Toray Fine Chemicals Co., Ltd.)
- Zinc oxide: trade name "Zinc Oxide III" (available from Seido Chemical Industry Co., Ltd.)
- Stearic acid: trade name "Stearic acid 50S" (available from Chiba Fatty Acid Co., Ltd.)
- P-phenylenediamine-based anti-aging agent 1 (white): N,N'-di-2-naphthyl-p-phenylenediamine (structure shown below), trade name "NOCRAC White" (available from Ouchi Shinko Chemical Industrial Co., Ltd.) 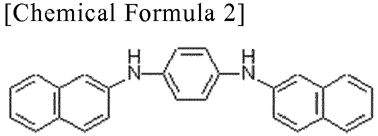
- P-phenylenediamine-based anti-aging agent 2: compound name N,N'-diphenyl-p-phenylenediamine (structure shown below), trade name "NOCRAC DP" (available from Ouchi Shinko Chemical Industrial Co., Ltd.) 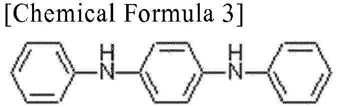
- Anti-aging agent (MMB): trade name "NOCRAC MMB" (available from Ouchi Shinko Chemical Industrial Co., Ltd.), 2-mercaptomethyl benzimidazole (structure shown below) 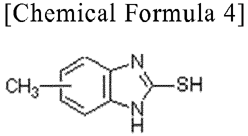
- Vulcanization accelerator 1 (TT): tetramethylthiuram disulfide (thiuram-based, NOCCELER TT, available from Ouchi Shinko Chemical Industrial Co., Ltd.)
- Vulcanization accelerator 2 (DM): dibenzothiazyl disulfide (thiazole type, Sanceller DM, available from Sanshin Chemical Industry Co., Ltd.)
- Sulfur: powdered sulfur (available from Karuizawa Refinery Ltd.)

As is clear from the results shown in Table 1, Comparative Example 1 including no p-phenylenediamine-based anti-aging agent exhibited poor bloom resistance one week after vulcanization.

In Comparative Example 2, in which the content of the p-phenylenediamine-based anti-aging agent exceeded a predetermined range, the bloom resistance one week after vulcanization was poor.

On the other hand, the compositions of the present invention achieved excellent bloom resistance.

### Reference Signs List

- 1: Hose
- 2: Inner layer
- 3: Reinforcing member
- 4: Outer layer

## Claims

1. A rubber composition comprising an ethylene-propylene-diene copolymer, a p-phenylenediamine-based anti-aging agent, carbon black, and zinc oxide,
the content of the p-phenylenediamine-based anti-aging agent being 0.1 parts by mass or more and 5.0 parts by mass or less per 100 parts by mass of the ethylene-propylene-diene copolymer.

2. The rubber composition according to claim 1, wherein
the diene composing the ethylene-propylene-diene copolymer comprises at least ethylidene norbornene, and
the content of the constituent unit by ethylidene norbornene is from 5 to 13 mass% of the ethylene-propylene-diene copolymer.

3. The rubber composition according to claim 1 or 2 further comprising a vulcanization accelerator, wherein the content of the vulcanization accelerator is 2.0 parts by mass or more per 100 parts by mass of the ethylene-propylene-diene copolymer.

4. The rubber composition according to claim 3, wherein the vulcanization accelerator comprises at least a thiuram-based vulcanization accelerator.

5. The rubber composition according to any one of claims 1 to 4 further comprising a crosslinking agent, wherein
the crosslinking agent comprises at least sulfur, and
the content of the crosslinking agent is 0.5 parts by mass or more per 100 parts by mass of the ethylene-propylene-diene copolymer.

6. The rubber composition according to any of one of claims 1 to 5, wherein the p-phenylenediamine-based anti-aging agent comprises at least N,N'-di-2-naphthyl-p-phenylenediamine.

7. The rubber composition according to any one of claims 1 to 6, wherein the mass ratio of the p-phenylenediamine-based anti-aging agent to the zinc oxide (p-phenylenediamine-based anti-aging agent/zinc oxide) is from 0.1 to 1.0.

8. The rubber composition according to any one of claims 1 to 7, the rubber composition being substantially free of peroxide.

9. The rubber composition according to any one of claims 1 to 8, the rubber composition used in an outer layer of a hose.

10. A hose having an outer layer formed of the rubber composition described in any one of claims 1 to 9.
